# EUROPÄISCHE PATENTSCHRIFT

(11) **EP 1 181 463 B1**
(45) Veröffentlichungstag und Bekanntmachung des Hinweises auf die Patenterteilung: **31.03.2004**
(21) Anmeldenummer: 00907502.9
(22) Anmeldetag: 05.02.2000
(51) Int. Cl.: F16C 17/10

(54) **GEBAUTE BUNDLAGERSCHALE**
ASSEMBLED FLANGE-BEARING SHELL
COQUILLE DE COUSSINET A BRIDE ASSEMBLEE

(30) Priorität: 31.05.1999 DE 19924854
(43) Veröffentlichungstag der Anmeldung: 27.02.2002
(73) Patentinhaber: KS Gleitlager GmbH, 68789 St. Leon-Rot (DE)
(72) Erfinder: BICKLE, Wolfgang, D-68799 Reilingen (DE); HAINKE, Werner, D-65366 Geisenheim (DE); KALDENHOFF, Kurt, D-12307 Berlin (DE); RUDOLF, Werner, D-69124 Heidelberg (DE); SCHUBERT, Werner, D-69168 Wiesloch (DE)
(74) Vertreter: Friz, Oliver
(86) Internationale Anmeldenummer: PCT/EP2000/000917
(87) Internationale Veröffentlichungsnummer: WO 2000/073673

(56) Entgegenhaltungen:
- DE-A- 4 015 256
- DE-A- 4 041 557
- DE-C- 3 933 667
- DE-C- 4 204 988
- DE-C- 4 225 000
- DE-C- 4 303 855
- GB-A- 2 134 189

## Beschreibung

Die Erfindung betrifft eine gebaute Bundlagerschale mit einem halbschalenförmigen Radiallagerteil und einem im Bereich der axialen Stirnseite des Radiallagerteils einseitig befestigten teilringscheibenförmigen Axiallagerteil oder mit beidseits befestigten teilringscheibenförmigen Axiallagerteilen, wobei jedes Axiallagerteil nach innen vorspringende Haltezungen aufweist, die mit Halteausnehmungen im Bereich eines axialen Randabschnitts des Radiallagerteils in Eingriff gebracht sind, wobei wenigstens eine der Halteausnehmungen in axialer Richtung randoffen ausgebildet ist und durch sich in Umfangsrichtung erstreckende Stege axial begrenzt ist.

Es existiert eine Anzahl von gattungsgemäßen Bundlagerschalen, bei denen zur verliersicheren Anordnung des Axiallagerteils am Radiallagerteil eine oder mehrere der nach innen vorspringenden Haltezungen oder diesen Haltezungen zugeordnete Spreizfinger, die ebenfalls nach innen vorspringen und als Teil der Haltezungen oder neben diesen vorgesehen sind, verformt werden. Es ist dies die DE 42 04 988 C1 oder DE 43 03 855 C1 zu entnehmen. Gemäß EP 0 515 657 A1 wird nach einem kombinierten radialen Füge- und axialen Kippvorgang zum Montieren des Axiallagerteils am Radiallagerteil die im Scheitel vorgesehene Haltezunge durch eine Kerbung derart verformt, dass sie die zugeordnete Halteöffnung beidseits des Scheitels radial innen übergreift.

Die Herstellung der vorstehend beschriebenen Verbindung des Axiallagerteils am Radiallagerteil ist kompliziert und die Maßhaltigkeit der Teile leidet beim Verformen der Haltezungen. Die Herstellbarkeit ist infolge des notwendigerweise von radial innen erfolgenden Zugangs beim Verformen der Haltezungen oder der Spreizfinger kompliziert.

Eine weitere gattungsgemäße Bundlagerschale ist aus der DE 40 15 256 A1 bekannt. Bei einem in dieser Druckschrift beschriebenen Ausführungsbeispiel werden in die axiale Stirnseite des Radiallagerteils nach dem Einstecken der Haltezungen in die Halteausnehmungen des Radiallagerteils beidseits der Halteausnehmungen Kerben eingebracht. Durch diese axiale Krafteinwirkung auf das Radiallagerteil wird eine verdrängende Verformung in Umfangsrichtung derart erreicht, dass die betreffende Haltezunge quasi umbördelt wird und in axialer Richtung nicht mehr aus der Halteausnehmung gelöst werden kann. Die verdrängende Verformung erfordert zur Ausübung und Aufnahme der hierfür benötigten Kräfte einen komplizierten Werkzeugaufbau. Da das Material in unmittelbare Anlage an die Haltelasche verformt wird, wird auch keine spielbehaftete Aufnahme des Axiallagerteils am Radiallagerteil erreicht.

Aus der DE 42 25 000 C1 ist eine nicht gattungsgemäße Bundlagerschale bekannt, bei der die Halteausnehmungen allseits geschlossen sind. Das Axiallagerteil wird in radialer Ebene des Radiallagerteils in die Montageposition gefügt und es wird wiederum ein Spreizfingerabschnitt der jeweils äußeren Haltezungen in Umfangsrichtung verformt.

Der vorliegenden Erfindung liegt die Aufgabe zugrunde, eine gebaute Bundlagerschale der eingangs beschriebenen Art mit verliersicher aber gleichwohl spielbehaftet miteinander verbundenem Axiallagerteil und Radiallagerteil dahingehend zu verbessern, dass sie sich einfacher herstellen lässt als bekannte gattungsgemäße Bundlagerschalen, ohne dass es zu einer Beeinträchtigung der Maßhaltigkeit bei Umformvorgängen kommt.

Diese Aufgabe wird bei einer Bundlagerschale der genannten Art durch die Merkmale des Anspruchs 1 gelöst.

Es hat sich als zweckmäßig und im Übrigen völlig hinreichend erwiesen, wenn zur Ausbildung einer in radialer Richtung verliersicheren Halterung des Axiallagerteils am Radiallagerteil ein verhältnismäßig schwach dimensionierter Steg geringfügig in axialer Richtung in die Ausnehmung hinein deformiert wird, um das Axiallagerteil am Herausfallen aus der Montageposition zu hindern. Bei der Montage des erfindungsgemäßen Bundlagers kann bei beiden Halteausnehmungen gleichzeitig der genannte Steg geringfügig in die Halteausnehmung hinein verformt werden, ohne dass sich Schwierigkeiten im Hinblick auf die Zugänglichkeit ergeben. Die Zugänglichkeit ist von der axialen Stirnseite her weit weniger problematisch als das Umformen von Spreizfingern in Umfangsrichtung, also von der radial inneren Seite des Radiallagerteils her.

Um das Axiallagerteil in axialer Richtung verliersicher zu halten, könnte im Scheitelpunkt eine weitere Haltelasche vorgesehen sein, die im Zusammenwirken mit einer Halteöffnung ein axiales Lösen des Axiallagerteils verhindert. Dem gegenüber erweist es sich aber als besonders vorteilhaft, wenn die randoffen ausgebildeten Halteausnehmungen beidseits des Scheitelpunkts an ihrer in Umfangsrichtung vom Scheitelpunkt abgewandten Seite von einer axialen Hinterschneidung des Radiallagerteils begrenzt sind und die Haltezungen durch die axiale Hinterschneidung der Halteausnehmungen gegen axiales Lösen gesichert sind. Solchenfalls kann nämlich auf die zusätzlich im Scheitelpunkt vorgesehene Haltezunge und eine korrespondierende Ausnehmung in dem Radiallagerteil verzichtet werden.

Es wird darauf hingewiesen, dass die Hinterschneidung, welche die zwei Haltezungen beidseits des Scheitelpunkts auf ihrer dem Scheitelpunkt zugewandten Seite ausbilden, eine Hinterschneidung der Fügerichtung des Axiallagerteils ausbilden müssen, die der radialen, durch den Scheitelpunkt gehenden Richtung entspricht.

In besonders vorteilhafter Weiterbildung des Erfindungsgedankens bildet das in Umfangsrichtung vom Scheitelpunkt abgewandte Ende einer Halteausnehmung eine Anlagefläche für die betreffende Haltezunge und diese Anlagefläche leitet die infolge der Drehung eines zu lagernden Maschinenelements gegen das Axiallagerteil auf das Axiallagerteil übertragene Kraft in Umfangsrichtung in das Radiallagerteil ein. Vorteilhafterweise sind die zwei beidseits des Scheitelpunkts vorgesehenen Halteausnehmungen in dieser Weise ausgebildet. Es wird darauf hingewiesen, dass das vorzugsweise geringe Spiel des Axiallagerteils am Radiallagerteil in Umfangsrichtung vorteilhafterweise so bemessen ist, dass je nach Drehrichtung oder Orientierung der Bundlagerschale die eine oder andere Haltezunge gegen die betreffende, vom Scheitelpunkt abgewandte Anlagefläche der Halteausnehmung anlegbar ist.

Als ganz besonders vorteilhaft erweist es sich, wenn die mit der Anlagefläche der Halteausnehmung zusammenwirkende Flanke der jeweiligen Haltezunge in Fügerichtung des Axiallagerteils verläuft. Vorteilhafterweise verlaufen die soeben erwähnte Flanke der Haltezunge und die Anlagefläche parallel zueinander, um einen gleichmäßigen Krafteintrag zu ermöglichen. Dies ist jedoch nicht zwingend erforderlich.

Nach einer bevorzugten Ausführungsform der Erfindung ist die Bundlagerschale so ausgebildet, dass zwischen der Hinterschneidung und der radial inneren Seite des axialen Randabschnitts ein wenigstens geringfügiger radialer Abstand gegeben ist.

Es erweist sich in herstellungstechnischer Hinsicht als besonders vorteilhaft, wenn mit den Haltezungen fluchtend und in Fügerichtung des Axiallagerteils erstreckt Ölnuten an dem Axiallagerteil vorgesehen sind. Solchenfalls kann die Materialabnahme zur Bildung der Haltelaschen und zur Bildung der Ölnuten in einem Arbeitsgang erfolgen.

Weitere Einzelheiten, Vorteile und Merkmale der Erfindung ergeben sich aus den beigefügten Patentansprüchen und aus der zeichnerischen Darstellung und nachfolgenden Beschreibung einer bevorzugten Ausführungsform der Erfindung.

In der Zeichnung zeigt:
- Figur 1: eine Seitenansicht der erfindungsgemäßen Bundlagerschale mit Radiallagerteil und Axiallagerteil im noch nicht gefügten Zustand;
- Figur 2: eine Draufsicht auf die Bundlagerschale nach Fig. 1 im gefügten Zustand;
- Figur 3: eine Ansicht der Bundlagerschale nach Fig. 1 im montierten Zustand in axialer Richtung gesehen;
- Figur 4: eine vergrößerte Ansicht des Axiallagerteils im Bereich einer Haltezunge;
- Figur 5: eine Draufsicht auf das Radiallagerteil der Bundlagerschale;
- Figur 6: eine vergrößerte Ansicht des Radiallagerteils nach Fig. 5 im Bereich einer Halteausnehmung in radialer Richtung betrachtet;
- Figur 7: eine vergrößerte Ansicht des Bereichs "Y" in Fig. 3; und
- Figur 8: eine vergrößerte Ansicht des Bereichs "X" in Fig. 2.

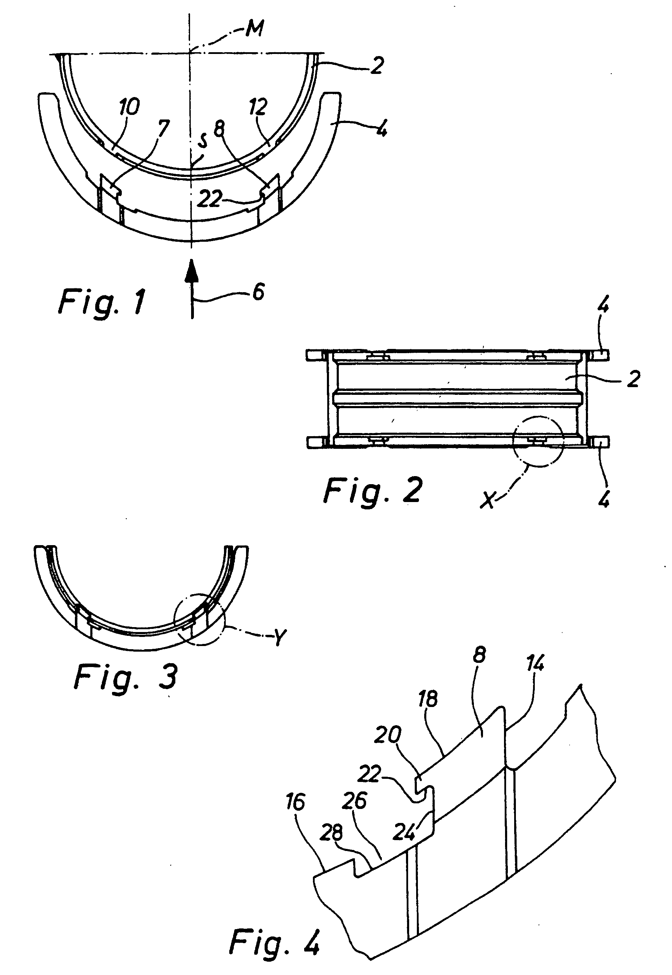

Die Figuren 1 bis 3 zeigen verschiedene Ansichten einer gebauten Bundlagerschale, die aus einem halbkreisförmig gebogenen Radiallagerteil 2 und daran unverlierbar, aber gleichwohl spielbehaftet befestigten Axiallagerteilen 4 gebildet ist. Figur 1 zeigt das Radiallagerteil 2 und ein Axiallagerteil 4 im noch nicht gefügten Zustand, wobei der Pfeil die Fügerichtung 6 angibt. Für die nachfolgende Beschreibung ist auch der Scheitelpunkt S der Bundlagerschale sowie der geometrische Mittelpunkt M des auf Halbkreisform gebogenen Radiallagerteils 2 dargestellt. Die Fügerichtung des Axiallagerteils kann also als radial durch den Scheitelpunkt S der Bundlagerschale gehend bezeichnet werden. Die axiale Richtung verläuft senkrecht zur Zeichnungsebene der Fig. 1.

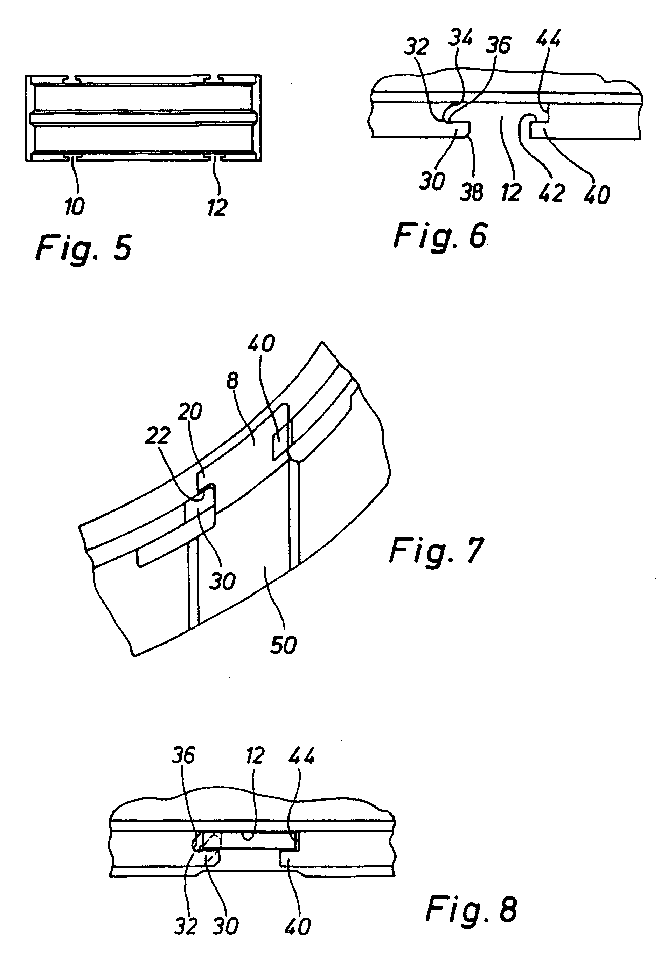

Das Axiallagerteil 4 weist zwei Haltezungen 7, 8 auf, die in Umfangsrichtung des Axiallagerteils 4 vom Scheitelpunkt S beabstandet sind. Die Haltezungen 7, 8 sind in Fügerichtung 6 ausgerichtet und durchgreifen im montierten Zustand entsprechende Halteausnehmungen 10, 12, die aus der Einzeldarstellung des Radiallagerteils 2 in Figur 5, aber auch aus der Darstellung der Figur 6 ersichtlich sind. Nach dem Hindurchstecken der Haltezungen 7, 8 durch die Halteausnehmungen 10, 12 wird das Axiallagerteil 4 auf noch näher zu beschreibende Weise gegen radiales Herausfallen gesichert und ist dabei gleichwohl spielbehaftet aufgenommen.

Die jeweilige Haltezunge 7, 8 ist folgendermaßen ausgebildet (siehe Fig. 4): Sie weist auf ihrer vom Scheitelpunkt S abgewandten Seite eine Flanke 14 auf, die sich parallel zur Fügerichtung 6 erstreckt. Die Flanke 14 geht verrundet über in einen konzentrisch zum kreisförmigen Verlauf eines Innenrandes 16 des Axiallagerteils 4 verlaufenden in Fügerichtung 6 vorderen Randbereich 18 über, der wieder in Richtung auf den Scheitelpunkt S zurück läuft. Der vordere Randbereich 18 läuft in einen in Richtung auf den Scheitel S erstreckten Ansatz 20 aus, der eine Hinterschneidung 22 der Fügerichtung 6 bzw. der radialen durch den Scheitelpunkt S gehenden Richtung bildet. Der Ansatz 20 weist in Umfangsrichtung eine Erstreckung von ca. 1,0 mm auf. Die Hinterschneidung 22 geht wiederum verrundet über in eine dem Scheitelpunkt S zugewandte Flanke 24, die wiederum in Fügerichtung 6, also parallel zur radialen durch den Scheitelpunkt S gehenden Richtung verläuft. Die Flanke 24 erstreckt sich über den Innenrand 16 bis in eine Vertiefung 26 mit einer radialen Tiefe von ca. 1,0 mm an der Innenseite des Axiallagerteils 4 hinein und geht dort verrundet in eine Grundfläche 28 dieser Vertiefung 26 über. Die Grundfläche 28 führt wiederum verrundet und wieder ansteigend in den Innenrand 16 des Axiallagerteils über.

Die mit den Haltezungen 7, 8 zusammenwirkenden Halteausnehmungen 10, 12 des Radiallagerteils 2 sind wie folgt ausgebildet:

Wie aus Figuren 6 und 8 ersichtlich ist, ist die Halteausnehmung 12 im wesentlichen rechteckförmig ausgebildet. Sie ist in axialer Richtung außen begrenzt durch einen in Umfangsrichtung verlaufenden frei auslaufenden Steg 30. Der Steg 30 ist bestimmungsgemäß in axialer Richtung in die Ausnehmung 12 hinein deformierbar. Um die Deformierbarkeit zu unterstützen und eine gezielte Sollbiegestelle 32 zu definieren, ist im Übergang des Stegs 30 zu der die Halteausnehmung 12 in Umfangsrichtung zum Scheitelpunkt S hin begrenzenden Fläche 34 eine Ausklinkung 36 vorgesehen, die also innen zur Ausnehmung 12 hin angebracht ist. Diese Ausklinkung 36 weist einen Teilkreisradius von 0,4 mm auf.

Der Steg 30 ist im Bereich seines freien Endes zum axialen Randbereich hin angefast. Er weist dort eine 45° zur axialen Richtung einnehmende Anfasung 38 auf.

Auf der dem Steg 30 in Umfangsrichtung gegenüberliegenden Seite ist die Halteausnehmung 12 durch einen entsprechenden Steg 40 begrenzt, der eine axial wirkende Hinterschneidung 42 bildet. Diese Hinterschneidung 42 sichert das montierte Axiallagerteil 4 in axialer Richtung. Die Hinterschneidung 42 der Halteausnehmung 12 geht über in eine Anlagefläche 44, welche quasi die vom Scheitel S abgewandten kurzen Seiten der die Halteausnehmung 12 begrenzenden Rechteckform bildet. Diese Anlagefläche 44 bildet ein Widerlager für die vom Scheitelpunkt S abgewandte Flanke 14 der Haltezunge 8. Wenn im montierten Zustand Kräfte in Umfangsrichtung wirken und das Axiallagerteil 4 gegenüber dem Radiallagerteil 2 zu verdrehen suchen, so wird die Flanke 14 der Haltezunge 8 in Anlage gegen die Anlagefläche 44 der Halteausnehmung 12 gebracht, und dabei werden diese Kräfte auf das Radiallagerteil 2 und von dort auf einen Lagerstuhl übertragen. Die andere Halteausnehmung 10 ist in entsprechender Weise ausgebildet und weist eine entsprechende vom Scheitelpunkt S abgewandte Anlagefläche auf, welche dann Umfangskräfte aufnimmt, wenn bei Betrachtung der Figur 1 das Axiallagerteil 4 in Uhrzeigersinnrichtung verdreht wird.

Zur Montage des Axiallagerteils 4 am Radiallagerteil 2 wird dieses in radialer Ebene des Radiallagerteils 2 in Fügerichtung 6 verschoben, wobei die Haltezungen 7, 8 des Axiallagerteils 4 durch die Halteausnehmungen 10, 12 des Radiallagerteils 2 hindurch gesteckt werden. Wenn der radial innere Randbereich 16 des Axiallagerteils 4 gegen das Radiallagerteil anliegt, ist die Montageposition erreicht. Dabei ist die Hinterschneidung 22 der jeweiligen Haltezunge 7, 8 radial innerhalb des die jeweilige Halteausnehmung 10, 12 bildenden Randabschnitts des Radiallagerteils 2 angeordnet. Um diese Montageposition zu sichern und ein radiales Herausfallen des Axiallagerteils 4 zu verhindern, wird der die jeweilige Halteausnehmung begrenzende Steg 30 in die Halteausnehmung 10, 12 hineindeformiert und untergreift dabei die Hinterschneidung 22 in Fügerichtung 6. Hierdurch ist das Axiallagerteil 2 an einem Herausfallen in radialer Ebene gehindert. Die axiale Sicherung wird dadurch erreicht, dass der andere Steg 40, der die randoffenen Halteausnehmungen 10, 12 auf der anderen Seite begrenzt, mit seiner axial wirkenden Hinterschneidung 42 die jeweilige Haltezunge 7, 8 in axialer Richtung stützt und am Herausfallen hindert. Gleichwohl ist das Axiallagerteil 4 mit seinen Haltezungen 7, 8 spielbehaftet in der jeweiligen Ausnehmung 10, 12 aufgenommen. Figur 8 zeigt den Steg 30 sowohl im ursprünglichen Zustand zum Einführen der Haltelaschen als auch im nach innen gebogenen Zustand. Dadurch, dass die Ausklinkung 36 eine Sollbiegestelle 32 definiert, ist das Nach-Innen-Biegen des Stegs 30 unproblematisch und mit hoher Präzision durchführbar.

Es erweist sich als ganz besonders vorteilhaft, dass beim Auftreten von Kräften, welche das Axiallagerteil 4 in Umfangsrichtung zu verdrehen suchen, die jeweils vom Scheitelpunkt abgewandte Flanke 14 der jeweiligen Haltezunge 7, 8 gegen die ein Widerlager bildende Anlagefläche 44 des die Ausnehmung in Umfangsrichtung begrenzenden Radiallagerteils 2 gebracht wird, so dass diese Umfangskräfte vom Axiallagerteil 4 auf das Radiallagerteil 2 übertragen und sodann an den Lagerstuhl abgeführt werden können. Dies funktioniert für Umfangskräfte in beiden Richtungen. Es braucht daher beim Einbau der montierten gebauten Bundlagerschale auf den "Drehsinn" keinerlei Rücksicht genommen zu werden, was die Montagearbeiten erheblich erleichtert.

Es erweist sich desweiteren als besonders vorteilhaft, dass die jeweilige Haltezunge 7, 8 in Fügerichtung 6 ausgerichtet ist und daher in radialer Ebene ohne axiales Verkippen in die Montageposition gebracht werden kann. Desweiteren kann die Herstellung vereinfacht werden, indem eine Ölnut 50 (Figur 7) quasi fluchtend mit der jeweiligen Haltezunge 7, 8 ausgebildet ist. Die Ölnut 50 ist durch spanabhebende, vorzugsweise fräsende Bearbeitung hergestellt. Da im Bereich der jeweiligen Haltezunge 7, 8 ebenfalls ein Materialabtrag erforderlich ist, kann die Ausbildung der Haltezunge 7, 8 und der Ölnut 50 in einem Arbeitsgang ausgeführt werden.

## Patentansprüche

1. Gebaute Bundlagerschale mit einem halbschalenförmigen Radiallagerteil (2) und einem im Bereich der axialen Stirnseite des Radiallagerteils einseitig befestigten teilringscheibenförmigen Axiallagerteil (4) oder mit beidseits befestigten teilringscheibenförmigen Axiallagerteilen, wobei jedes Axiallagerteil (4) nach innen vorspringende Haltezungen (7, 8) aufweist, die mit Halteausnehmungen (10, 12) im Bereich eines axialen Randabschnitts des Radiallagerteils (4) in Eingriff gebracht sind, wobei wenigstens eine der Halteausnehmungen (10, 12) in axialer Richtung randoffen ausgebildet ist und durch sich in Umfangsrichtung erstreckende Stege (30) axial begrenzt ist, **dadurch gekennzeichnet, dass** das Axiallagerteil (4) durch verkippungsfreies Fügen in radialer Ebene bezüglich dem Radiallagerteil (2) in seine Montageposition gebracht ist und dass zwei Haltezungen (7, 8) beidseits des Scheitelpunkts (S) auf ihrer dem Scheitelpunkt (S) zugewandten Seite eine Hinterschneidung (22) der radialen durch den Scheitelpunkt (S) gehenden Fügerichtung (6) des Axiallagerteils (4) bilden, die im montierten Zustand der Bundlagerschale jeweils von einem die betreffende randoffen ausgebildete Halteausnehmung (10, 12) axial begrenzenden Steg (30) des Radiallagerteils (2) untergriffen ist, der aus seiner Erstreckung in Umfangsrichtung in axialer Richtung in die Halteausnehmung (10, 12) hinein gebogen ist, sodass das Axiallagerteil (4) durch diesen Untergriff gegen radiales Herausfallen gesichert ist, ohne selbst im Zuge der Montage verformt worden zu sein.

2. Bundlagerschale nach Anspruch 1, **dadurch gekennzeichnet, dass** die randoffen ausgebildeten Halteausnehmungen (10, 12) beidseits des Scheitelpunkts (S) an ihrer in Umfangsrichtung vom Scheitelpunkt abgewandten Seite von einer axialen Hinterschneidung (42) begrenzt sind und die Haltezungen (7, 8) durch die axiale Hinterschneidung (42) gegen axiales Lösen aus den Halteausnehmungen (10, 12) gesichert sind.

3. Bundlagerschale nach Anspruch 1 oder 2, **dadurch gekennzeichnet, dass** das in Umfangsrichtung vom Scheitelpunkt (S) abgewandte Ende einer Halteausnehmung (10, 12) eine Anlagefläche (44) für die betreffende Haltezunge (7, 8) bildet, und dass über diese Anlagefläche (44) die in Folge der Drehung eines zu lagernden Maschinenelements gegen das Axiallagerteil (4) auf das Axiallagerteil (4) ausgeübte Kraft in Umfangsrichtung in das Radiallagerteil (2) einleitbar ist.

4. Bundlagerschale nach Anspruch 3, **dadurch gekennzeichnet, dass** die in Umfangsrichtung vom Scheitelpunkt (S) abgewandten Enden der zwei beidseits des Scheitelpunkts (S) vorgesehenen Halteausnehmungen (10, 12) je eine Anlagefläche (44) für die betreffende Haltezunge (7, 8) bilden, und dass diese Anlageflächen (44) die in Folge der Drehung eines zu lagernden Maschinenelements gegen das Axiallagerteil (4) auf das Axiallagerteil eingeleitete Kraft in das Radiallagerteil (2) einleiten.

5. Bundlagerschale nach Anspruch 3 oder 4, **dadurch gekennzeichnet, dass** die mit der Anlagefläche (44) der Halteausnehmung (10, 12) zusammenwirkende Flanke (14) der jeweiligen Haltezunge (7, 8) in Fügerichtung (6) des Axiallagerteils verläuft.

6. Bundlagerschale nach Anspruch 3, 4 oder 5, **dadurch gekennzeichnet, dass** die mit der Anlagefläche (44) der Halteausnehmung zusammenwirkende Flanke (14) der jeweiligen Haltezunge (7, 8) parallel zu der Anlagefläche (44) verläuft.

7. Bundlagerschale nach einem oder mehreren der vorstehenden Ansprüche, **dadurch gekennzeichnet, dass** die Hinterschneidung (22) der Haltezungen (7, 8) von einem 0,8 bis 1,2 mm langen in Umfangsrichtung in Richtung auf den Scheitel (S) erstreckten Ansatz (20) der Haltezunge (7, 8) gebildet ist.

8. Bundlagerschale nach einem oder mehreren der vorstehenden Ansprüche, **dadurch gekennzeichnet, dass** die Haltezungen (7, 8) an ihrem in Fügerichtung (6) vorderen Randbereich (18) konzentrisch zur Umfangsrichtung ausgebildet sind.

9. Bundlagerschale nach einem oder mehreren der vorstehenden Ansprüche, **dadurch gekennzeichnet, dass** mit den Haltezungen (7, 8) fluchtend und in Fügerichtung des Axiallagerteils (4) erstreckt Ölnuten (50) an dem Axiallagerteil (4) vorgesehen sind.

10. Bundlagerschale nach einem oder mehreren der vorstehenden Ansprüche, **dadurch gekennzeichnet, dass** die Haltezungen (7, 8) eine Umfangslänge projiziert auf die Abwicklungsebene von 4 bis 15 mm aufweisen.

11. Bundlagerschale nach einem oder mehreren der vorstehenden Ansprüche, **dadurch gekennzeichnet, dass** der die randoffen ausgebildete Halteausnehmung (10, 12) axial begrenzende Steg (30) des Radiallagerteils (2) eine Erstreckung in Umfangsrichtung von 0,8 bis 1,5 mm, vorzugsweise von 0,9 bis 1,2 mm und eine axiale Dicke von 0,7 bis 1,2 mm, vorzugsweise von 0,8 bis 1,0 mm aufweist.

12. Bundlagerschale nach einem oder mehreren der vorstehenden Ansprüche, **dadurch gekennzeichnet, dass** im übergang des die randoffen ausgebildete Halteausnehmung (10, 12) axial begrenzenden Stegs (30) zu der die Halteausnehmung in Umfangsrichtung zum Scheitelpunkt (S) hin begrenzenden Fläche (34) eine Ausklinkung (36) vorgesehen ist, die eine Sollbiegestelle (32) des Stegs (30) definiert.

13. Bundlagerschale nach Anspruch 12, **dadurch gekennzeichnet, dass** die Ausklinkung (36) einen Teilkreisradius zwischen 0,3 und 0,5 mm beschreibt.

14. Bundlagerschale nach einem oder mehreren der vorstehenden Ansprüche 2 bis 13, **dadurch gekennzeichnet, dass** der die randoffen ausgebildete Halteausnehmung (10, 12) axial begrenzende Steg (30) und die weitere axiale Hinterschneidung (42) in Umfangsrichtung 1,8 bis 2,8 mm, vorzugsweise 2,2 bis 2,5 mm voneinander beabstandet sind.

15. Bundlagerschale nach einem oder mehreren der vorstehenden Ansprüche, **dadurch gekennzeichnet, dass** die Halteausnehmung (10, 12) in Projektion auf die Abwicklung des Radiallagerteils betrachtet vor dem Umbiegen des Stegs im Wesentlichen rechteckförmig ausgebildet ist.

16. Bundlagerschale nach einem oder mehreren der vorstehenden Ansprüche, **dadurch gekennzeichnet, dass** nur die zwei Haltezungen (7, 8) und korrespondierende Ausnehmungen (10, 12) beidseits des Scheitels (S) vorgesehen sind.

## Claims

1. Assembled flange-bearing shell having a half shell-shaped radial bearing part (2) and a partial flat ring-shaped axial bearing part (4) attached on one side in the region of the axial end face of the radial bearing part, or having partial flat ring-shaped axial bearing parts attached on both sides, each axial bearing part (4) having inwardly projecting retaining tongues (7, 8), which are engaged in retaining recesses (10, 12) in the region of an axial rim portion of the radial bearing part (4), at least one of the retaining recesses (10, 12) being configured with an open rim in the axial direction and being axially delimited by tabs (30) extending in the peripheral direction, **characterised in that** the axial bearing part (4) is brought into its assembly position through tilt-free mating in the radial plane relative to the radial bearing part (2), and **in that** two retaining tongues (7, 8), on both sides of the vertex (S), form, on the side facing the vertex (S), an undercut (22) of the radial mating direction (6), which passes through the vertex (S), of the axial bearing part (4), which undercut, in the assembled state of the flange-bearing shell, is respectively engaged from below by a tab (30), axially delimiting the particular open-rimmed retaining recess (10, 12), of the radial bearing part (2), which tab is bent from its extension in the peripheral direction in the axial direction into the retaining recess (10, 12), such that the axial bearing part (4) is secured through this engagement against radially falling out, without itself becoming deformed in the course of assembly.

2. Flange-bearing shell according to claim 1, **characterised in that** the open-rimmed retaining recesses (10, 12) on both sides of the vertex (S) are delimited on the side remote from the vertex in the peripheral direction by an axial undercut (42), and the retaining tongues (7, 8) are secured by the axial undercut (42) against axial loosening from the retaining recesses (10, 12).

3. Flange-bearing shell according to either of claims 1 and 2, **characterised in that** the end of one retaining recess (10, 12), remote from the vertex (S) in the peripheral direction, forms a bearing surface (44) for the appropriate retaining tongue (7, 8), and that, via this bearing surface (44), the force transmitted to the axial bearing part (4) resulting from the rotation of a machine part to be mounted against the axial bearing part (4) can be transferred, in the peripheral direction, into the radial bearing part (2).

4. Flange-bearing shell according to claim 3, **characterised in that** the ends remote from the vertex (S) in the peripheral direction of the two retaining recesses (10, 12) provided on both sides of the vertex (S) each form a bearing surface (44) for the appropriate retaining tongue (7, 8), and that these bearing surfaces (44) transfer into the radial bearing part (2) the force transmitted to the axial bearing part resulting from the rotation of a machine part to be mounted against the axial bearing part (4).

5. Flange-bearing shell according to either of claims 3 and 4, **characterised in that** the flank (14) of the respective retaining tongue (7, 8) cooperating with the bearing surface (44) of the retaining recess (10, 12) extends in the mating direction (6) of the axial bearing part.

6. Flange-bearing shell according to any of claims 3, 4 and 5, **characterised in that** the flank (14) of the respective retaining tongue (7, 8) cooperating with the bearing surface (44) of the retaining recess extends parallel to the bearing surface (44).

7. Flange-bearing shell according to one or more of the preceding claims, **characterised in that** the undercut (22) of the retaining tongues (7, 8) is formed from a 0.8 to 1.2 mm-long lip (20) of the retaining tongue (7, 8) extended in the peripheral direction towards the vertex (S).

8. Flange-bearing shell according to one or more of the preceding claims, **characterised in that** the retaining tongues (7, 8) are configured concentrically to the peripheral direction on their leading edge region (18) in the mating direction (6).

9. Flange-bearing shell according to one or more of the preceding claims, **characterised in that** oil grooves (50) are provided on the axial bearing part (4), aligned with the retaining tongues (7, 8) and extended in the mating direction of the axial bearing part (4).

10. Flange-bearing shell according to one or more of the preceding claims, **characterised in that** the retaining tongues (7, 8) have a peripheral length projected onto the developed plane of 4 to 15 mm.

11. Flange-bearing shell according to one or more of the preceding claims, **characterised in that** the tab (30) of the radial bearing part (2) axially delimiting the open-rimmed retaining recess (10, 12) extends 0.8 to 1.5 mm, preferably 0.9 to 1.2 mm in the peripheral direction, and has an axial thickness of 0.7 to 1.2 mm, preferably 0.8 to 1.0 mm.

12. Flange-bearing shell according to one or more of the preceding claims, **characterised in that** a notch (36) is provided in the transition between the tab (30) axially delimiting the open-rimmed retaining recess (10, 12) and the surface (34) delimiting the retaining recess in the peripheral direction towards the vertex (S), which notch defines a desired bending location (32) for the tab (30).

13. Flange-bearing shell according to claim 12, **characterised in that** the notch (36) describes a segment radius of between 0.3 and 0.5 mm.

14. Flange-bearing shell according to one or more of claims 2 to 13, **characterised in that** the tab (30) axially delimiting the open-rimmed retaining recess (10, 12) and the additional axial undercut (42) are set 1.8 to 2.8 mm, preferably 2.2 to 2.5 mm, apart from each other in the peripheral direction.

15. Flange-bearing shell according to one or more of the preceding claims, **characterised in that** the retaining recess (10, 12), viewed in projection onto the development of the radial bearing part prior to the bending of the tab, is configured substantially as a rectangle.

16. Flange-bearing shell according to one or more of the preceding claims, **characterised in that** only the two retaining tongues (7, 8) and corresponding recesses (10, 12) are provided on both sides of the vertex (S).

## Revendications

1. Coquille de coussinet à bride assemblée avec un élément de coussinet radial (2) en forme de demi-coquille et un élément de coussinet axial (4) en forme de secteur de rondelle, fixé d'un côté au niveau de la face frontale axiale de l'élément de coussinet radial, ou avec des éléments de coussinet axiaux en forme de secteurs de rondelle fixés des deux côtés, chaque élément de coussinet axial (4) présentant des languettes de retenue (7, 8) qui dépassent vers l'intérieur et sont mises en prise avec des évidements de retenue (10, 12) ménagés au niveau d'un bord axial de l'élément de coussinet radial (4), au moins un des évidements de retenue (10, 12) étant ouvert sur un bord dans la direction axiale et limité axialement par des barrettes (30) qui s'étendent dans la direction circonférentielle, **caractérisée en ce que** l'élément de palier axial (4) est placé dans sa position de montage par assemblage fixe en basculement dans le plan radial par rapport à l'élément de palier radial (2) et **en ce que** deux languettes de retenue (7, 8) agencées de part et d'autre du point de rebroussement (S) forment, sur leur face en regard du point de rebroussement (S), une contre-dépouille (22) par rapport à la direction d'assemblage (6) de l'élément de palier axial (4), c'est-à-dire la direction radiale passant par le point de rebroussement (S), chaque contre-dépouille étant, après assemblage de la coquille de coussinet à bride, maintenue inférieurement par une barrette (30) de l'élément de palier radial (2), qui délimite axialement l'évidement de retenue (10, 12) concerné ouvert sur un côté, ladite barrette étant, depuis son orientation circonférentielle, cintrée dans la direction axiale vers l'intérieur de l'évidement de retenue (10, 12), de sorte que l'élément de coussinet axial (4) est empêché de tomber radialement par ce maintien inférieur, sans avoir été lui-même déformé au cours du montage.

2. Coquille de coussinet à bride selon la revendication 1, **caractérisée en ce que** les évidements de retenue (10, 12) ouverts sur un côté et agencés de part et d'autre du point de rebroussement (S), sont délimités, sur leur face opposée au point de rebroussement dans la direction circonférentielle, par une contre-dépouille axiale (42) et **en ce que** les languettes de retenue (7, 8) sont empêchées de se détacher axialement des évidements de retenue (10, 12) par ladite contre-dépouille axiale (42).

3. Coquille de coussinet à bride selon l'une quelconque des revendications 1 et 2, **caractérisée en ce que** l'extrémité d'un évidement de retenue (10, 12) qui est située à l'opposé du point de rebroussement (S) dans la direction circonférentielle forme une surface d'appui (44) pour la languette de retenue concernée (7, 8) et **en ce que** la force exercée sur l'élément de coussinet axial (4) à la suite de la rotation d'un organe de machine à supporter en rotation par rapport à l'élément de coussinet axial (4) peut être transmise par cette surface d'appui (44) à l'élément de coussinet radial (2) dans la direction circonférencielle.

4. Coquille de coussinet à bride selon la revendication 3, **caractérisée en ce que** les extrémités des deux évidements de retenue (10, 12) prévus de part et d'autre du point de rebroussement (S), qui sont situées à l'opposé dudit point de rebroussement (S) dans la direction circonférentielle forment chacune une surface d'appui (44) pour la languette de retenue (7, 8) concernée et **en ce que** ces surfaces d'appui (44) transmettent à l'élément de coussinet radial (2) la force transmise à l'élément de palier axial suite à la rotation d'un organe de machine à supporter en rotation par rapport à l'élément de palier axial (4).

5. Coquille de coussinet à bride selon l'une quelconque des revendications 3 et 4, **caractérisée en ce que** le flanc (14) de chaque languette de retenue (7, 8), qui coopère avec la surface d'appui (44) de l'évidement de retenue (10, 12), s'étend dans la direction d'assemblage (6) de l'élément de palier axial.

6. Coquille de coussinet à bride selon l'une quelconque des revendications 3, 4 et 5, **caractérisée en ce que** le flanc (14) de chaque languette de retenue (7, 8), qui coopère avec la surface d'appui (44) de l'évidement de retenue, s'étend parallèlement à la surface d'appui (44).

7. Coquille de coussinet à bride selon une ou plusieurs des revendications précédentes, **caractérisée en ce que** la contre-dépouille (22) de chaque languette de retenue (7, 8) est formée par un nez (20) de ladite languette de retenue (7, 8), qui est long de 0,8 à 1,2 mm et s'étend dans la direction circonférentielle en direction du point de rebroussement (S).

8. Coquille de coussinet à bride selon l'une ou plusieurs des revendications précédentes, **caractérisée en ce que** les languettes de retenue (7, 8) sont formées concentriques à la direction circonférentielle au niveau de leur bord avant (18) dans le sens d'assemblage (6).

9. Coquille de coussinet à bride selon une ou plusieurs des revendications précédentes, **caractérisée en ce que** des rainures de graissage (50) alignées avec les languettes de retenue (7, 8) et s'étendant dans la direction d'assemblage de l'élément de coussinet axial (4) sont prévues sur l'élément de coussinet axial (4).

10. Coquille de coussinet à bride selon une ou plusieurs des revendications précédentes, **caractérisée en ce que** les languettes de retenue (7, 8) présentent une longueur circonférentielle projetée sur le plan de développement de 4 à 15 mm.

11. Coquille de coussinet à bride selon une ou plusieurs des revendications précédentes, **caractérisée en ce que** la barrette (30) de l'élément de palier radial (2), qui délimite axialement l'évidement de retenue (10, 12) ouvert sur un bord, a une dimension dans la direction circonférentielle de 0,8 à 1,5 mm, de préférence de 0,9 à 1,2 mm, et une épaisseur axiale de 0,7 à 1,2 mm, de préférence de 0,8 à 1,0 mm.

12. Coquille de coussinet à bride selon une ou plusieurs des revendications précédentes, **caractérisée en ce qu'**au niveau de la transition entre la barrette (30) qui délimite axialement l'évidement de retenue (10, 12) ouvert sur un bord et la surface (34) qui délimite l'évidement de retenue en direction du point de rebroussement (S) dans la direction circonférentielle est prévue une encoche (36), qui définit un point de flexion (32) de la barrette (30).

13. Coquille de coussinet à bride selon la revendication 12, **caractérisée en ce que** l'encoche (36) présente un rayon de cercle partiel compris entre 0,3 et 0,5 mm.

14. Coquille de coussinet à bride selon une ou plusieurs des revendications 2 à 13, **caractérisée en ce que** la barrette (30) délimitant axialement l'évidement de retenue (10, 12) ouvert sur un bord et la contre-dépouille axiale (42) située plus loin dans la direction circonférentielle sont espacées l'une de l'autre de 1,8 à 2,8 mm, de préférence de 2,2 à 2,5 mm.

15. Coquille de coussinet à bride selon une ou plusieurs des revendications précédentes, **caractérisée en ce qu'**en projection sur le plan de développement de l'élément de coussinet radial, l'évidement de retenue (10, 12) affecte une forme générale rectangulaire avant cintrage de la barrette.

16. Coquille de coussinet à bride selon une ou plusieurs des revendications précédentes, **caractérisée en ce que** seuls sont prévus les deux languettes de retenue (7, 8) et les évidements correspondants (10, 12) de part et d'autre du point de rebroussement (S).
